Europäisches Patentamt

European Patent Office

Office européen des brevets

(19)

(11) Numéro de publication : **0 279 717 B1**

(12) **FASCICULE DE BREVET EUROPEEN**

(45) Date de publication du fascicule du brevet :
17.04.91 Bulletin 91/16

(51) Int. Cl.⁵ : **F16H 1/45**

(21) Numéro de dépôt : **88400105.8**

(22) Date de dépôt : **19.01.88**

(54) **Dispositif de différentiel.**

(30) Priorité : **23.01.87 FR 8700757**

(43) Date de publication de la demande :
**24.08.88 Bulletin 88/34**

(45) Mention de la délivrance du brevet :
**17.04.91 Bulletin 91/16**

(84) Etats contractants désignés :
**BE DE ES GB IT NL SE**

(56) Documents cités :
**EP-A- 0 278 812
DE-C- 201 805
FR-A- 768 330
FR-A- 2 572 152
FR-A- 2 581 151
US-A- 1 276 432**

(73) Titulaire : **REGIE NATIONALE DES USINES
RENAULT
Boîte postale 103 8-10 avenue Emile Zola
F-92109 Boulogne-Billancourt (FR)**

(72) Inventeur : **Valentin, Daniel
67, avenue de Buzenval
F-92500 Rueil-Malmaison (FR)**
Inventeur : **Mercier, Jacques
62, avenue de Suffren
F-75015 Paris (FR)**

(74) Mandataire : **Chassagnon, Jean Alain et al
8/10, avenue Emile Zola
F-92109 Boulogne-Billancourt (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un différentiel à transfert de couple par voie mécanique entre les deux sorties lorsque le couple susceptible d'être transmis par une d'entre elles est limité.

On appelle aussi ces différentiels des différentiels à glissement limité.

On connaît déjà des systèmes à frottements rapportés, par exemple des différentiels incluant des disques de frottements prétarés ou non entre les deux sorties ou entre une sortie et le boîtier.

On connaît également des différentiels ayant un frottement naturel par l'utilisation dans leur chaîne cinématique interne d'engrenages à axes perpendiculaires et non concourants comme roue et vis sans fin. Un différentiel d'après le préambule de la revendication 1 est connu de US-A-1 276 432.

On peut reprocher à ces réalisations leur encombrement, leur complexité et leur coût.

Le but de la présente invention est la création d'un différentiel compact, simple et n'utilisant pas d'élément supplémentaire à ceux strictement nécessaires pour obtenir la fonction différentiel, donc à un faible coût.

Conformément à l'invention, ce différentiel se compose essentiellement d'un planétaire et de satellites classiques pour une sortie, de planétaire et de satellites du type engrenage extérieur dont les éléments tournent dans le même sens décrits dans la demande de brevet EP-A-0 278 812 (publié le 17.08.88) pour l'autre sortie qu'on appellera par la suite pignons spéciaux. Ces pignons spéciaux ont un profil en développante de cercle et tournent de façon parfaitement homocinétique.

Selon un mode de réalisation de l'invention des butées sont disposées sur les axes de satellites entre le boîtier et lesdits satellites, ce qui permet d'obtenir des frottements supplémentaires dus à l'angle d'hélice de pignons spéciaux.

Le différentiel, selon l'invention, présente ainsi l'avantage de se monter facilement à la place d'un différentiel classique tout en permettant d'obtenir la fonction transfert de couple. De plus, ce type de différentiel utilise un minimum d'éléments, c'est-à-dire ceux qui sont strictement nécessaires à la fonction différentiel. De ce fait, le dispositif, selon l'invention, a un prix de revient particulièrement avantageux.

D'autres caractéristiques et avantages de la présente invention ressortiront de la description qui suit le mode de réalisation donné à titre d'exemple en référence aux dessins annexés sur lesquels :

    – la figure 1 est une coupe longitudinale de l'ensemble du dispositif selon l'invention.

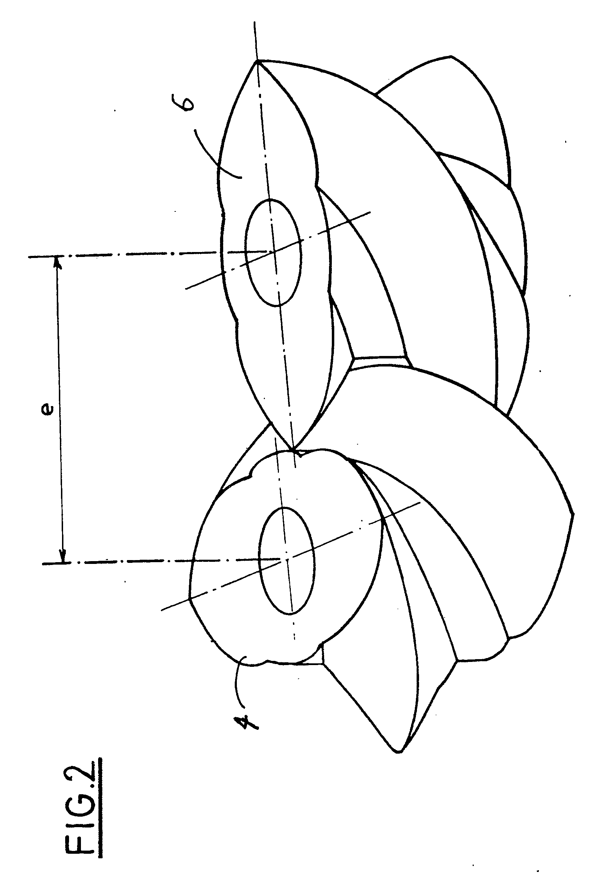

    – la figure 2 est une vue en perspective des pignons spéciaux.

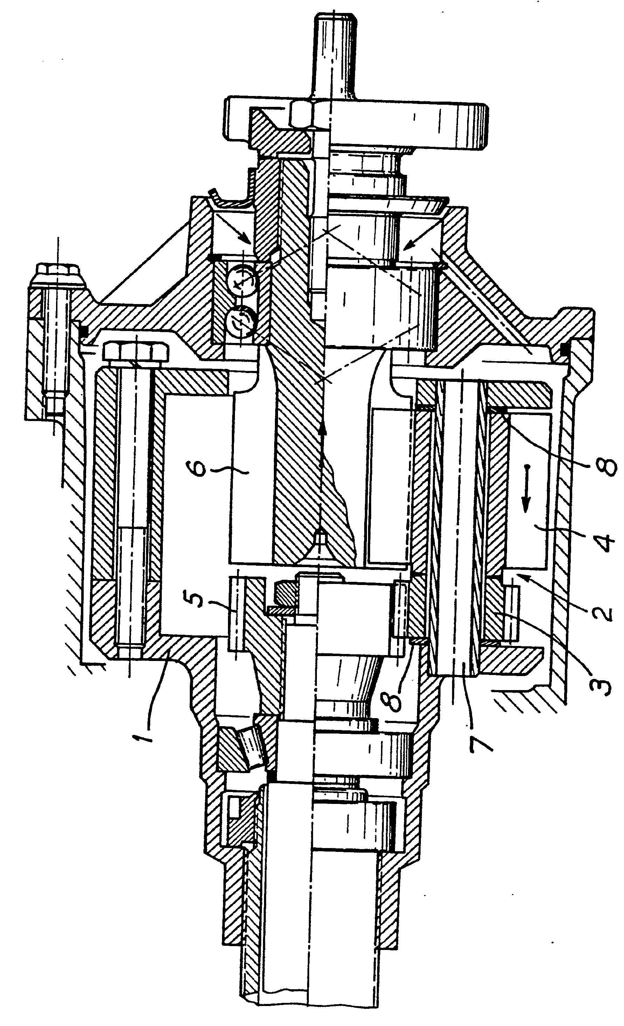

Sur la figure 1, on voit le boîtier 1 qui reçoit le mouvement d'entrée. Ce boîtier 1 porte des satellites référencés 2 dans leur ensemble d'axe 7 parallèle à l'axe du boîtier 1, c'est-à-dire à l'axe du différentiel, chacun comportant un pignon de type classique ou satellite 3 et un pignon spécial ou satellite 4, ces deux satellites 3 et 4 étant liés ensemble en rotation au moyen d'une soudure. Les satellites 3 engrènent avec le planétaire de sortie 5 qui est un pignon de type classique.

Les satellites 4 engrènent avec le planétaire de sortie 6 qui est aussi un pignon de type spécial.

Par rapport au boîtier 1 du différentiel, le planétaire 6 tournant dans un sens, les satellites 2 tournent dans le même sens (par l'intermédiaire de l'engrènement des pignons spéciaux, c'est-à-dire des satellites 4), le planétaire 5 tourne en sens inverse (par l'intermédiaire de l'engrènement des pignons classiques, c'est-à-dire des satellites 3).

La fonction différentiel est bien ainsi réalisée avec le minimum de pièces.

Il est à remarquer que les satellites 4, c'est-à-dire les pignons spéciaux et leur planétaire 6, peuvent avoir le même nombre de dents et une denture identique, par exemple des pignons à deux dents. Le partage du couple théorique (en l'absence de frottements) entre les deux sorties peut être choisi à volonté en jouant sur les nombres de dents de satellites 3 et du planétaire 5, c'est-à-dire des pignons classiques.

Conformément à l'invention, les couples de pignons spéciaux (le planétaire 6 et un satellite 4) ont des caractéristiques géométriques : rayon de cercle de base et entraxes tels que le rendement de cet engrenage soit volontairement faible de manière à assurer la fonction transfert de couple. A titre d'exemple, un rapport entraxe sur rayon du cercle de base supérieur à 4 assure déjà, compte tenu d'un coefficient de frottement de 0,15, un rendement inférieur à 0,55. Ces pignons spéciaux ayant de plus, par nature, un angle d'hélice assez élevé (hélice sur au moins un demi-tour pour un pignon à deux dents) vont générer sous couple une poussée axiale créant ainsi sur des butées de frottement 8 une perte de rendement supplémentaire.

Il est à remarquer de plus que la continuité de rotation des satellites 2 est assurée de toute façon par les engrènements de la sortie à pignons classiques.

Il n'est donc pas nécessaire, et c'est une des caractéristiques de l'invention, dès lors qu'on a plusieurs satellites 2, qu'une continuité totale soit assurée au niveau de chaque couple de pignons spéciaux pour avoir quand même la continuité totale au niveau de la sortie planétaire. On pourra donc au choix réduire l'angle d'hélice pour diminuer la poussée axiale ou réduire l'épaisseur des pignons spéciaux pour diminuer l'encombrement axial. Ceci permet d'ajuster les frottements dans une architecture donnée.

Il résulte de la description les points suivants qui sont caractéristiques de l'invention.

– En première caractéristique, le différentiel objet de l'invention se compose d'un boîtier 1 portant des satellites 2 d'axes parallèles à l'axe du boîtier 1 et deux sorties par planétaire 5 et 6.

– En deuxième caractéristique, l'une des sorties est composée de pignons classiques, c'est-à-dire des satellites 3 et du planétaire 5. L'autre sortie est composée de pignons spéciaux, c'est-à-dire des satellites 4 et du planétaire 6, les satellites 3 et 4 des 2 types étant liés en rotation sur chacun de leurs axes au moyen d'une soudure.

– En troisième caractéristique, les pignons spéciaux, c'est-à-dire les satellites 4 et leur planétaire 6, sont des pièces identiques, en ce sens qu'elles ont un même nombre de dents et la même denture.

– En quatrième caractéristique, le partage du couple théorique sans frottement est donné par les seuls rapports de dents de l'ensemble des pignons classiques, c'est-à-dire satellites 3 et planétaire 5.

– En cinquième caractéristique, la fonction transfert de couple est assurée par un choix judicieux du rapport entre l'entraxe et le rayon du cercle de base de l'engrenage spécial planétaire 6, satellite 4. Ce rapport étant de préférence supérieur à 4.

– En sixième caractéristique, des butées 8 permettent d'obtenir des frottements supplémentaires générés par l'angle d'hélice des pignons spéciaux, angle important de part la nature de ces pignons.

– En septième caractéristique, la continuité totale d'engrènement au niveau de chaque pignon spécial ou satellite 4 n'est pas nécessaire pour avoir la continuité totale au niveau de la sortie, ce qui permet de moduler les efforts supplémentaires ou de réduire l'encombrement.

– En huitième caractéristique, tous les pignons peuvent être usinés et contrôlés sur machines traditionnelles à tailler les engrenages cylindriques à développante de cercle.

## Revendications

1. Dispositif de différentiel comportant un boîtier (1) portant des satellites (2) d'axe parallèle à l'axe du boîtier (1) et deux sorties de mouvement s'effectuant chacune par un planétaire (5) et (6), l'une des sorties de mouvement s'effectuant au moyen de pignons classiques : satellite (3) et planétaire (5), tandis que l'autre sortie de mouvement se réalise au moyen de pignons spéciaux tournant dans le même sens : satellite (4) et planétaire (6), les satellites (3) et (4) montés sur le même axe (7) étant solidaires l'un avec l'autre, caractérisé en ce que les pignons spéciaux ont un profil en développante de cercle et tournent de façon parfaitement homocinétique.

2. Dispositif de différentiel selon la revendication 1 caractérisé en ce que les pignons spéciaux tournant dans le même sens, c'est-à-dire les satellites (4) et le planétaire (6), ont le même nombre de dents et une denture identique.

3. Dispositif de différentiel selon la revendication 2 caractérisé en ce que le rapport des dents des pignons classiques, c'est-à-dire les satellites (3) et le planétaire (5), est établi de manière à répartir le couple théorique sans frottement qu'il faut transmettre.

4. Dispositif de différentiel selon la revendication 1 caractérisé en ce que la fonction transfert de couple est donnée par la détermination de l'entraxe et des rayons des cercles de bases des pignons spéciaux, c'est-à-dire les satellites (4) et le planétaire (6).

5. Dispositif de différentiel selon la revendication 4 caractérisé en ce que des butées (8) sont disposées sur les axes (7) entre les satellites (3) et (4) et le boîtier (1), de manière à obtenir des frottements supplémentaires générés par l'angle d'hélice des pignons spéciaux, c'est-à-dire les satellites (4) et le planétaire (6).

6. Dispositif de différentiel selon la revendication 1 caractérisé en ce que le satellite (3) et le satellite (4) montés sur le même axe (7) sont soudés.

7. Dispositif de fixation selon les revendications 2 et 4 caractérisé en ce que le rapport entre l'entraxe et le rayon du cercle de base est supérieur à 4.

## Ansprüche

1. Differentialvorrichtung, mit einem Gehäuse (1), in dem Planetenräder (2) angeordnet sind, deren Achsen parallel zur Achse des Gehäuses (1) sind und mit zwei Bewegungsausgängen, die jeweils von einem Sonnenrad (5 und 6) antreibbar sind, wobei einer der Bewegungsausgänge durch herkömmliche Ritzel antreibbar ist : Planetenrad (3) und Sonnenrad (5), während der andere Bewegungsausgang durch Spezialritzel antreibbar ist, die sich in der gleichen Richtung drehen : Planetenrad (4) und Sonnenrad (6), wobei die Planetenräder (3 und 4) auf derselben Achse (7) befestigt und fest miteinander verbunden sind, dadurch gekennzeichnet, daß die Spezialritzel ein Profil aufweisen, das durch eine Kreiserzeugende bestimmt ist und daß sie sich perfekt homokinetisch drehen.

2. Differentialvorrichtung nach Anspruch 1, dadurch gekennzeichnet, daß die Spezialritzel sich in derselben Richtung drehen, d. h. daß die Planetenräder (4) und das Sonnenrad (6) die gleiche Anzahl von Zähnen und eine identische Zahnung aufweisen.

3. Differentialvorrichtung nach Anspruch 2, dadurch gekennzeichnet, daß das Verhältnis der Zähne der herkömmlichen Ritzel, d. h. der Planetenräder (3) und des Sonnenrades (5) derart gewählt ist, daß das zu übertragende theoretische Drehmoment ohne Reibung verteilt wird.

4. Differentialvorrichtung nach Anspruch 1, dadurch gekennzeichnet, daß die Funktion der Drehmomentübertragung gegeben ist durch die Bestimmung des Achsabstandes und der Radius der Grundkreise der Spezialritzel, d. h. der Planetenräder (4) und des Sonnenrades (6).

5. Differentialvorrichtung nach Anspruch 4, dadurch gekennzeichnet, daß Anschläge (8) an den Achsen (7) zwischen den Planetenrädern (3 und 4) und dem Gehäuse (1) derart vorgesehen sind, daß zusätzliche Reibungen entstehen, erzeugt durch den Spiralwinkel Ger Spezialritzel, d. h. der Planetenräder (4) und des Sonnenrades (6).

6. Differentialvorrichtung nach Anspruch 1, dadurch gekennzeichnet, daß das auf der gleichen Achse (7) angeordnete Planetenrad (3) und das Planetenrad (4) angeschweißt sind.

7. Differentialvorrichtung nach Ansprüchen 2 und 4, dadurch gekennzeichnet, daß das Verhältnis zwischen dem Achsabstand und dem Radius des Grundkreises größer als 4 ist.

## Claims

1. A differential arrangement comprising a casing (1) carrying planetary gears (2) with the axis thereof parallel to the axis of the casing (1) and two motion outputs each effected by way of a sun gear (5) and (6), one of the motion outputs being effected by means of conventional pinions : planetary gear (3) and sun gear (5) while the other motion output is effected by means of special pinions rotating in the same direction : planetary gear (4) and sun gear (6), the planetary gears (3) and (4) which are mounted on the same shaft (7) being fixed with respect to each other characterised in that the special pinions have a profile in the form of an involute of a circle and rotate in perfectly homokinetic fashion.

2. A differential arrangement according to claim 1 characterised in that the special pinions rotating in the same direction, that is to say the planetary gears (4) and the sun gear (6), have the same number of teeth and an identical tooth configuration.

3. A differential arrangement according to claim 2 characterised in that the ratio of the teeth of the conventional pinions, that is to say the planetary gears (3) and the sun gear (5), is established in such a way as to distribute the theoretical torque without friction that is to be transmitted.

4. A differential arrangement according to claim 1 characterised in that the torque transfer function is afforded by determining the spacing between axes and the radii of the base circles of the special pinions, that is to say the planetary gears (4) and the sun gear (6).

5. A differential arrangement according to claim 4 characterised in that abutments (8) are disposed on the shafts (7) between the planetary gears (3) and (4) and the casing (1) so as to produce additional frictional effects generated by the helix angle of the special pinions, that is to say the planetary gears (4) and the sun gear (6).

6. A differential arrangement according to claim 1 characterised in that the planetary gear (3) and the planetary gear (4) which are mounted on the same shaft (7) are welded.

7. A differential arrangement according to claims 2 and 4 characterised in that the ratio between the spacing between axes and the radius of the base circle is higher than 4.

# FIG.2

EP 0 279 717 B1